# EUROPEAN PATENT SPECIFICATION

(11) **EP 2 257 352 B1**
(45) Date of publication and mention of the grant of the patent: **23.04.2014**
(21) Application number: 09720897.9
(22) Date of filing: 11.03.2009
(51) Int. Cl.: B01D 1/22, B01D 1/28, B01D 3/08, B01D 5/00, F28D 11/02, F28D 21/00

(54) **LIQUID EVAPORATOR**
Flüssigkeitsverdampfer
EVAPORATEUR DE LIQUIDE

(30) Priority: 13.03.2008 DK 200800386
(43) Date of publication of application: 08.12.2010
(73) Proprietor: Envotherm A/S, 6430 Nordborg (DK)
(72) Inventor: OLSEN, Jan, DK-6400 Sønderborg (DK)
(74) Representative: Inspicos A/S
(86) International application number: PCT/DK2009/000062
(87) International publication number: WO 2009/112029

(56) References cited:
- WO-A-02/02202
- US-A- 2 532 267
- US-A1- 2003 132 096
- US-A1- 2005 279 620

## Description

The invention concerns a liquid evaporator comprising an evaporation chamber with a liquid inlet, a condensation chamber with a liquid outlet, a heat conducting wall arranged with an evaporation surface in the evaporation chamber and a condensation surface in the condensation chamber, a pump structure and a fluid connection passage between the evaporation chamber and the condensation chamber.

Liquid evaporators are typically used for sewage treatment, separation of oil from water, reprocessing of process liquids or desalination of sea water.

In known liquid evaporators, liquid is entered through the liquid inlet to the evaporation chamber, so that a gas pockets is formed in the evaporation chamber, to which gas pocket a share of the liquid evaporates under adoption of heat energy. A compressor pumps gas containing steam from the gas pocket through the connection passage to the condensation chamber, where the steam is condensed under emission of heat energy. The condensed liquid, the condensate, is led away from the condensation chamber through the liquid outlet. As the pressure in the condensation chamber exceeds the pressure in the evaporation chamber, the steam in the condensation chamber condenses at a temperature, which is higher than the boiling point of the liquid in the evaporation chamber. The temperature In the condensation chamber is thus higher than the temperature in the evaporation chamber. A part of the heat energy is therefore transferred through the heat conducting wall from the condensation chamber to the evaporation chamber and is thus recycled for the evaporation of the liquid in the evaporation chamber. This gives an energy saving of up to approximately 30% in relation to systems without heat regeneration.

WO02/02202 discloses an evaporator and condenser unit for use in distilling a liquid. The evaporator has a housing, a motor for supplying rotary power within the housing, a compressor having a compressor inlet for receiving a vapour generated within the housing, and a compressor outlet for returning compressed vapour to the housing.

US2532267 discloses an apparatus for compressing vapours or gases. The apparatus comprises a compressor having a stationary casing member and an internal rotary member with a plurality of spaced ports around its circumference. The casing member has spaced ports for successive registration with ports of the rotary member to establish suction and compression areas about the circumference of said axial extension.

Known liquid evaporators work efficiently and are profitable at liquid flows of approximately 100 l/h or more. They are relatively easily scaled up to larger systems. However, when scaling down, the systems get relatively expensive and heavy due to the many components comprised. It is therefore endeavoured to simplify the liquid evaporator, so that it can be manufactured from fewer components and thus become both cheaper and less heavy. It is particularly desirable to avoid the compressor, as it stands for a large share of both price and weight of the system. Besides, the compressor typically has a limited lifetime, which reduces the service interval of the systems.

The invention is based on a liquid evaporator comprising an evaporation chamber with a liquid inlet, a condensation chamber with a liquid outlet, a heat conducting wall arranged with an evaporation surface in the evaporation chamber and a condensation surface in the condensation chamber, a pump structure and a fluid connection passage between the evaporation chamber and the condensation chamber, in which the evaporation chamber is provided for containing a liquid, whose surface borders a gas pocket, the connection passage ending in the gas pocket. The simplification is achieved in supplying the connection passage with a valve arrangement comprising a non-return valve that permits fluid flow from the gas pocket towards the condensation chamber, when the pressure in the gas pocket exceeds the pressure in the condensation chamber, and that blocks fluid flow in the opposite direction, and by arranging the pump structure to cyclically increasing and reducing the pressure in the gas pocket by moving the heat conductive wall so that cyclically it exceeds the pressure in the condensation chamber. As it is relatively easy to obtain an oscillating pressure, the compressor in the known liquid evaporators can thus be replaced by a simpler, cheaper and less heavy pump structure.

The pump structure can be arranged to provide mechanical energy to the liquid in the evaporation chamber in such a manner that the liquid is heated. When the liquid temperature is increased, the evaporation speed of the liquid is increased. By using the pump structure for heating, another heat source in the liquid evaporator can be avoided. As the heat is added in the evaporation chamber, also the time from the start of the system till reaching the operation temperature is reduced.

The condensation chamber can be adapted to permit condensation of steam on the condensation surface of the heat conducting wall. This gives a particularly good transfer of the condensation heat to the heat conducting wall, which increases the efficiency of the system.

The pump structure can be adapted to increase and decrease the pressure In the gas pocked by compressing and expanding the gas pocket. This is a particularly efficient way of increasing and decreasing the pressure.

The pump structure can be adapted to compress and expand the gas pocket by moving the liquid in the evaporation chamber. As, thus, the pump has to move liquid instead of gas, a simpler, cheaper and less heavy pump structure can be used.

The pump structure can be adapted to compress and expand the gas pocket by moving the heat conductive wall. This is a particularly efficient way of compressing and expanding the gas pocket.

The condensation chamber can be arranged in the evaporation chamber and surrounded by an outer wall, which is completely or partly formed by the heat conducting wall. This gives a particularly efficient transfer of heat from the condensation chamber to the evaporation chamber. "Surrounded" means that the chamber has a pressure-tight outer wall, which can, however, be provided with entries for supply or removal of fluid, for measuring devices or the like.

The condensation chamber can be arranged for rotation around a rotation axis in the evaporation chamber. This gives an even more efficient transfer of heat from the condensation chamber to the evaporation chamber.

The outer wall of the condensation chamber can be arranged for cyclically compressing and expanding the gas pocket during the rotation of the condensation chamber. Thus, it is achieved that the outer wall of the condensation chamber can serve as pump structure, so that a separate pump structure can be avoided. The evaporation chamber can have a rounded cross-section transversely to the rotation axis, and the rotation axis can be arranged eccentrically in relation to the rounded evaporation chamber. Thus, the outer wall of the condensation chamber can interact with the outer wall of the evaporation chamber to serve, in a particularly simple manner, as pump structure. "Rounded" means approximately circular.

The outer wall of the condensation chamber can be adapted to make the liquid in the evaporation chamber rotate in such a way that a liquid ring is formed. Thus, in a simple manner, the gas pocket can be accommodated in a recess in the outer wall of the condensation chamber. A liquid ring means a rotating ring of liquid, which will, driven by the centrifugal force, cling to the outer wall of the evaporation chamber, and which has an approximately circular-cylindrical surface towards the central part of the evaporation chamber, which will thus remain gas-filled.

The heat conducting wall can form a number of blades. This is a simple way of making the liquid in the evaporation chamber rotate, and at the same time heat energy can efficiently be transferred from the heat conducting wall to the liquid in the evaporation chamber. A blade is a plate-like structure with a surface having both a tangent with a substantial component in the direction of the rotation axis and a tangent with a substantial radial component in relation to the rotation axis. Several blades can be assembled to, for instance, form a screw-like structure or a watermill-like structure.

In each axial end the outer wall of the condensation chamber can form a disc-shaped plate, on which the blades bear tightly. In this way, a number of wedge-shaped recesses is formed in the outer wall of the condensation chamber, each wedge-shaped recess being well suited for accommodating a gas pocket.

The insides of the blades may form chambers, each being a part of the condensation chamber. This causes that during the rotation of the condensation chamber, condensate can be flung from the condensation surface, which provides a more efficient transfer of heat from the condensing steam to the heat conducting wall.

The blades can be plane and extend radially from the rotation axis. This ensures a particularly efficient way of flinging condensate from the condensation surface, as the centrifugal power will be parallel to a large share of the condensation surface. Further, it is achieved that the liquid in the evaporation chamber can be put to rotation in a particularly efficient way.

The valve arrangement can comprise a number of openings in the outer wall of the condensation chamber, said openings being arranged around the rotation axis. This makes it particularly easy to realise several valves with a few components.

The liquid outlet can comprise a stationary collection arrangement with an open inlet pointing towards the rotation direction of the condensation chamber rotation in the evaporation chamber. Thus, the kinetic energy in the condensate that rotates together with the condensation chamber, can be used to pump the condensate out of the condensation chamber, even through the pressure of the condensation chamber should be lower than the pressure of the environment. Thus, a separate pump can be avoided.

The invention further concerns a method according to claim 17.

The method can be further improved by making the condensation chamber rotate around a rotation axis in the evaporation chamber and making the liquid in the evaporation chamber rotate in such a manner that a liquid ring is formed, and by the condensation chamber cyclically compressing and expanding the gas pocket during its rotation. This ensures that a separate pump arrangement can be avoided for the execution of the method, as the outer wall of the condensation chamber together with the outer wall of the evaporation chamber can serve as pump arrangement.

In the following, the invention is described on the basis of the drawings, showing:
- Fig. 1: a schematic, vertical section through a simple embodiment of the liquid evaporator according to the invention,
- Fig. 2: a horizontal section (A-A in Fig. 6) through a different, preferred embodiment of the liquid evaporator according to the invention,
- Fig. 3: a vertical section (B-B in Fig. 7) through the liquid evaporator of Fig. 2,
- Fig. 3a: a section of Fig. 3,
- Fig. 3b: a different section of Fig. 3,
- Fig. 4: the liquid evaporator of Fig. 2 in perspective, in a horizontal section,
- Fig. 5: the liquid evaporator of Fig. 2 in perspective, in a vertical section,
- Fig. 6: a side view of the liquid evaporator of Fig. 2
- Fig. 7: a bottom view of the liquid evaporator of Fig. 2, and
- Fig. 8: an exploded view of a valve arrangement of the liquid evaporator of Fig. 2.

Unless otherwise stated, the directional statements in the following, such as left, right, up and down, refer to the figures.

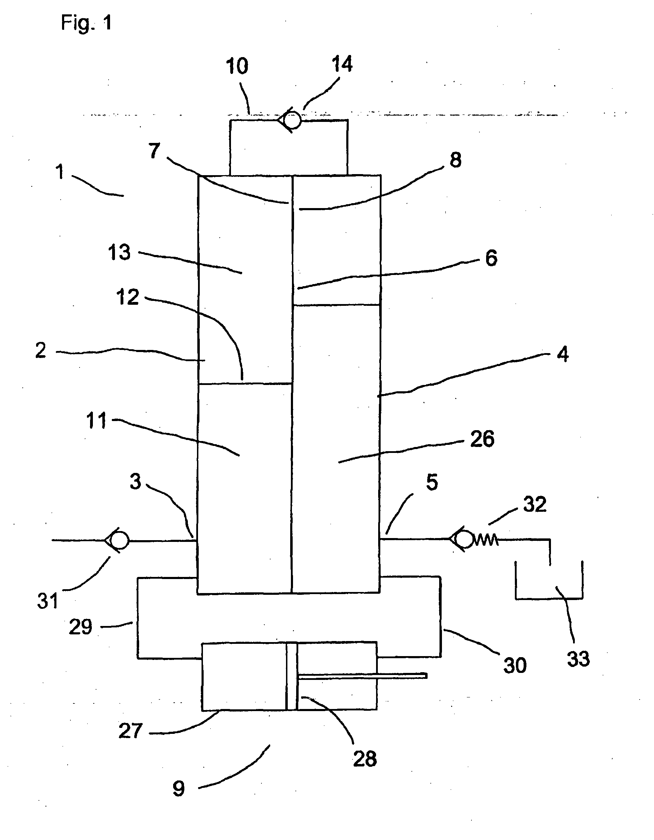

The simple liquid evaporator 1 in Fig. 1 comprises an evaporation chamber 2 with a liquid inlet 3, a condensation chamber 4 with a liquid outlet 5, a heat conducting wall 6 arranged with an evaporation surface 7 in the evaporation chamber 2 and a condensation surface 8 in the condensation chamber 4, a pump structure 9 and a fluid connection passage 10 between the evaporation chamber 2 and the condensation chamber 4. The evaporation chamber 2 contains a liquid 11, whose surface 12 borders a gas pocket 13. The connection passage 10 ends in the top of the evaporation chamber 2 and thus in the gas pocket 13, as, due to gravity, the gas pocket will settle here. The connection passage 10 is provided with a valve arrangement 14 comprising a first non-return valve that permits a fluid flow from the gas pocket 13 towards the condensation chamber 4, when the pressure in the gas pocket 13 exceeds the pressure in the condensation chamber 4, and blocks a fluid flow in the opposite direction.

The pump structure 9 has a cylinder 27, which comprises a displaceable piston 28. Via a first fluid passage 29, the first end of the cylinder 27 is connected to the evaporation chamber 2. Via a second fluid passage 30, the other end of the cylinder 27 is connected to the condensation chamber 4 that contains a condensate 26.

Via a second non-return valve 31, the liquid inlet 3 is connected to a liquid source (not shown), for example a sewage outlet of a machine. The second non-return valve 31 permits fluid flow from the liquid source to the evaporation chamber 2, when the pressure in the liquid source is larger than the pressure in the evaporation chamber 2, and blocks fluid flow in the opposite direction. Via a spring-loaded, third non-return valve 32, the liquid outlet 5 is connected to a tank 33, which will typically be open to atmospheric pressure. The third non-return valve 32 permits fluid flow from the condensation chamber 4 to the tank 33, when the pressure in the condensation chamber 4 exceeds the pressure in the tank 33 by a predetermined value, and blocks fluid flow in the opposite direction.

The liquid evaporator 1 in Fig. 1 functions in the following manner after having obtained a stable operation state. In the evaporation chamber 2 a part of the liquid 11 evaporates into the gas pocket 13. The piston 28 reciprocates cyclically in the cylinder 27 with a fixed period. Thus, liquid 11 is cyclically pumped to and from the evaporation chamber 2 through the first passage 29, while condensate 26 is pumped in the opposite cycle from and to the condensation chamber 4 through the second passage 30. At the same time, this supplies mechanical energy to the liquid 11 and the condensate 26, which are heated. As the compressibility of the liquid 11 is much smaller than that of the gas pocket 13, the gas pocket 13 is thus compressed and expanded cyclically, meaning that the pressure in the gas pocket increases and decreases. The same applies in the condensation chamber 4, where, however, the pressure changes in the opposite cycle in relation to the pressure in the evaporation chamber 2.

In the first part of the cycle, in which the pressure in the gas pocket 13 exceeds the pressure in the condensation chamber 4, gas containing steam is led from the gas pocket 13 through the connection passage 10 and the first non-return valve 14 to the condensation chamber 4. In the remaining part of the cycle, the non-return valve 14 blocks the flow. This creates a pump effect that causes the middle pressure in the condensation chamber 4 to exceed the middle pressure in the evaporation chamber 2, while, due to the heat conducting wall 6 the temperature is almost the same in the two chambers 2, 4. As the boiling/condensation temperature of the steam is higher at a high pressure than at a low pressure, the steam in the condensation chamber 4 will tend to condense. The condensation mainly takes place on the condensation surface 8, as this typically has the lowest temperature in the condensation chamber. The steam also condenses on the surface 26 of the condensate, and possibly also on the other outer walls of the condensation chamber 4, but typically at a lower speed. The creation of condensate 26 generates heat that is led to the evaporation chamber 2 via the heat conducting wall 6 to contribute to the heating of the liquid 11 and the gas pocket 13.

In a second part of the cycle, when the pressure in the evaporation chamber 2 is lower than the pressure in the liquid source, liquid is sucked in through the liquid inlet 3 and the second non-return valve 31. This liquid replaces the amount of gas and steam, which was pumped into the condensation chamber 4 during the first part of the cycle.

In a third part of the cycle, when the pressure in the condensation chamber 4 exceeds the pressure in the tank 33 by a predetermined value, a part of the condensate 26 is pumped out of the condensation chamber 4 through the liquid outlet 5 and the third non-return valve 32 to the tank 33. The third part of the cycle will typically overlap the second part of the cycle. The first part of the cycle can overlap the second and/or the third part.

In the stable operation state, the temperatures and the middle pressures in the evaporation chamber 2 and the condensation chamber 4 are in an equilibrium, which depends on several factors, such as the composition of the liquid, the temperature and the pressure of the liquid source, the amount of the flowing liquid, the pressure in the tank 33, the spring force in the third non-return valve 32, the amount of energy supplied by the pump arrangement 9 to the liquid 11 or the condensate 26, the properties of the heat conducting wall 6, the ambient temperature and the heat loss of the chambers 2, 4 to the environment. With a suitable dimensioning of the liquid evaporator 1 and its components, temperatures and middle pressures can thus be optimally regulated in relation to the properties of the liquid to be evaporated, and to the desired liquid flow. Such a regulation can also take place adaptively during operation of the liquid evaporator 1. The energy loss from surplus heat energy in the part of the condensate 26 that is led to the tank 33 can be reduced by leading this part of the condensate 26 through the hot side in a heat exchanger and at the same time lead liquid from the liquid source through the cold side of the same heat exchanger, thus using a part of the otherwise lost heat energy to heat the liquid from the liquid source before it reaches the evaporation chamber 2. The heat loss from the chambers 2, 4 to the environment can be reduced by isolating the chambers 2, 4, and/or by operating the liquid evaporator 1 at low middle pressures, which reduces the boiling points and thus also the operation temperatures in the chambers 2, 4. The middle pressures in the two chambers 2, 4 can easily be lower than the pressure in the ambient atmosphere.

The liquid evaporator 1 is started by starting the piston 28 and then adding liquid 11 from the liquid source through the liquid inlet 3 and the second non-return valve 31 to the evaporation chamber 2. In order to make sure during the start phase that sufficient liquid is entering the evaporation chamber 2, the pressure in the liquid source may be increased, or the second non-return valve 31 can be forced open. The stable operation state is reached, when the amount of energy supplied by the pump arrangement 9 to the liquid 11 and the condensate 26 corresponds to the net heat loss to the environment, for example from the liquid evaporator, or as surplus heat in the part of the condensate 26 that is led to the tank 33. In order to accelerate the achievement of the stable operation state, the temperature of the liquid from the liquid source can be increased.

During operation, the liquid evaporator 1 separates the liquid from the liquid source into condensate 26 that is led off to the tank 33 and concentrate that remains in the evaporation chamber 2. The content of concentrate in the liquid 11 will thus increase. Depending on the composition of the liquid, the concentrate can be drained off automatically, for example through a suitable valve arrangement with connection to the evaporation chamber 2. This is, for example, possible, if the concentrate is heavier than the liquid 11, thus gathering in the lower part of the evaporation chamber 2. Alternatively, the evaporation chamber 2 can be flushed manually or automatically at regular intervals to remove the concentrate.

Instead of a pump structure 9 comprising a cylinder 27 and a piston 28, the pump effect can be formed by a movement of the heat conducting wall 6. The wall, or a part of the wall, can be made of a flexible material, which is brought to bend cyclically towards the evaporation chamber 2 and the condensation chamber 4, respectively. The bending can be initiated by external means, for example a motor driven piston rod, or by manufacturing the flexible part of the wall 6 completely or partly of a material, which bends during application of an electrical voltage, for example piezo ceramics.

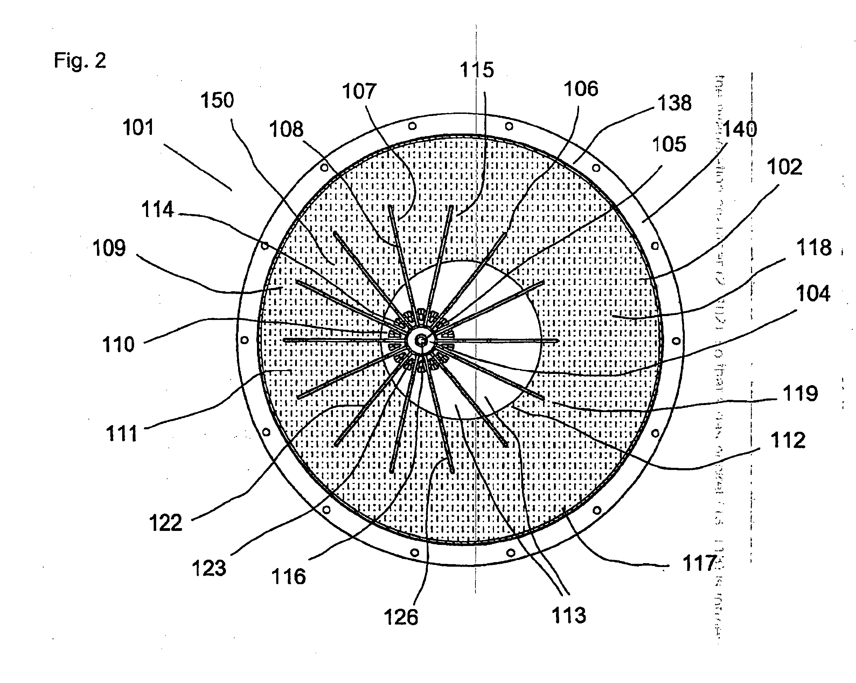

The figures 2 to 8 concern a second, preferred embodiment of a liquid evaporator according to the invention.

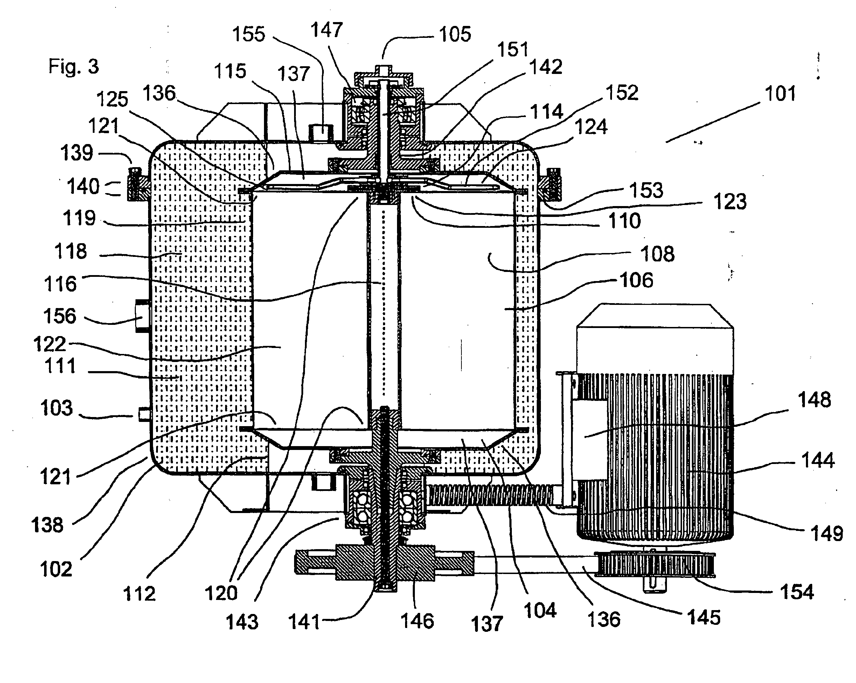

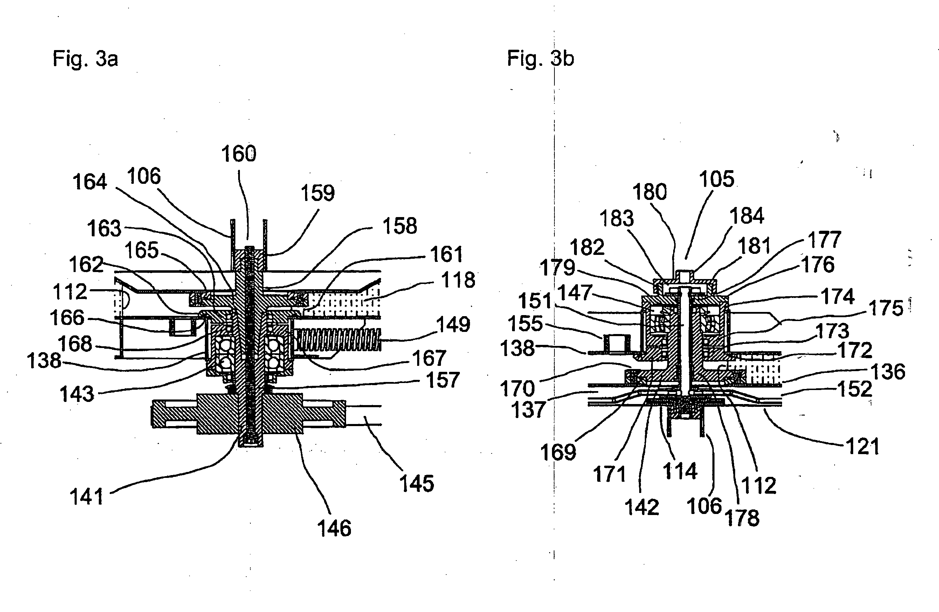

The liquid evaporator 101 in Fig. 2 comprises an evaporation chamber 102 with a liquid inlet 103 (Fig. 3), a condensation chamber 104 with a liquid outlet 105, a heat conducting wall 106 arranged with an evaporation surface 107 in the evaporation chamber 102 and a condensation surface 108 in the condensation chamber 104, a pump structure 109 and a number of fluid connection passages 110 between the evaporation chamber 102 and the condensation chamber 104. The condensation chamber is arranged to rotate around a vertical rotation axis 116 in the evaporation chamber 102 and surrounded by an outer wall 115, which has a cylindrical part that is formed by the heat conducting wall 106. The evaporation chamber 102 has a rounded cross-section 117 transversely to the rotation axis 116, and the rotation axis 116 is arranged eccentrically to the rounded evaporation chamber 102. The heat conducting wall 106 forms a number of blades 119, which are plane and extend radially from the rotation axis 116. A number of wedge-shaped chambers is formed between the blades 119. The insides of the blades 119 form chambers 122, which form a part of the condensation chamber 104. The condensate 126 in the condensation chamber 104 is shown in the radial outer ends of the chambers 122, where it will gather because of the rotation of the condensation chamber 104.

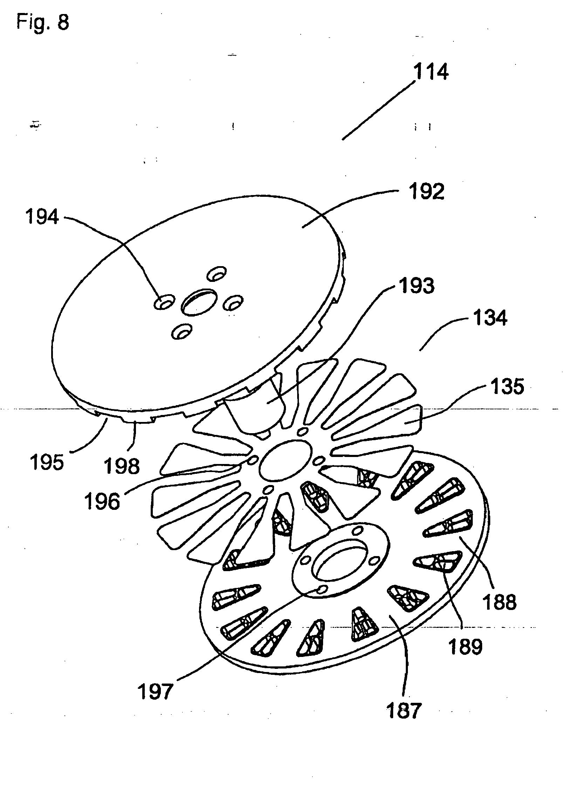

The evaporation Chamber 102 contains a liquid 111, which is brought to rotate around a vertical axis by the rotation of the condensation chamber 104, thus forming a liquid ring 118, whose inner cylindrical surface 112 borders a number of gas pockets 113 radially outwards, said gas pockets being located in the chambers 150 between the blades 119. A connection passage 110 ends in the radial inner part of each chamber 150 and thus in each gas pocket 113. Each connection passage 110 is provided with a valve arrangement 114 with a first non-return valve that permits fluid flow from the respective gas pocket 113 towards the condensation chamber 104, when the pressure in the gas pocket 113 exceeds the pressure in the condensation chamber 104, and blocks a fluid flow in the opposite direction. Each valve arrangement 114 comprises an opening 123 in the outer wall of the condensation chamber 115, and the openings 123 are arranged around the rotation axis 116. The valve arrangements 114 further comprise a common, star-shaped valve element 134 (Fig. 8), whose flexible flaps 135 are arranged to open and close the individual openings 123.

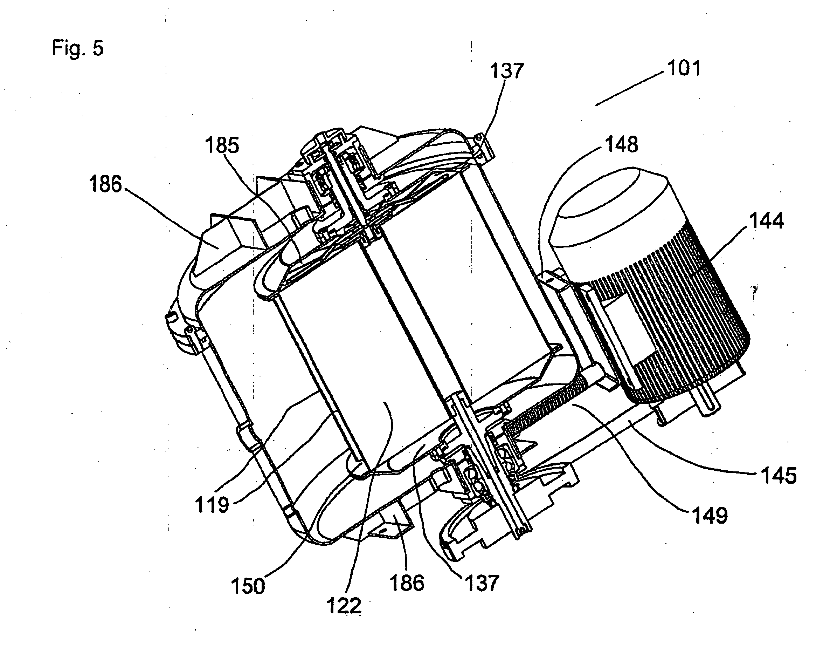

As shown in Fig. 3, each axial end 120 of the outer wall 115 of the condensation chamber forms a disc-shaped plate 121, on which the blades 119 bear tightly. The two disc-shaped plates 121 thus axially border the chambers 150 between the blades 119. Each axial end 120 of the outer wall 115 of the condensation chamber further forms a plate-shaped disc 136, whose periphery is joined with the corresponding disc-shaped plate 121. This results in two disc-shaped chambers 137, which are in fluid connection with the chambers 122 inside the blades 119 through radially oriented slots 185 (Fig. 5) in the disc-shaped plates 121. Thus, the chambers 137 form a part of the condensation chamber 104.

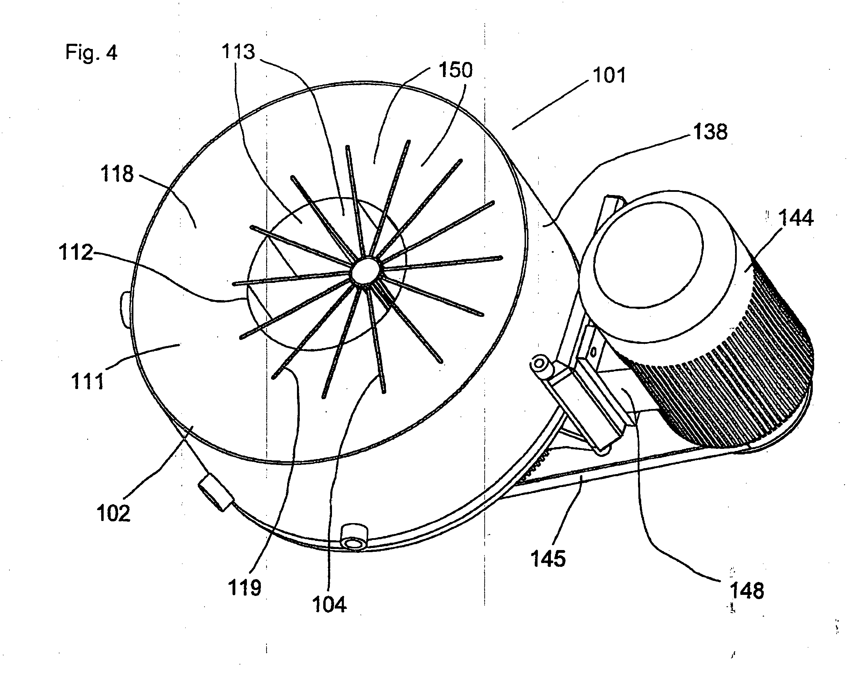

The outer wall 138 of the evaporation chamber is made in two parts, which are joined by means of bolts 139 through flanges 140 on the parts. An O-ring 153 is arranged between the flanges 140. The evaporation chamber 102 is fixed to a lower main shaft 141 and an upper support shaft 142. The main shaft 141 is supported in a main bearing 143 and led through the lower part of the outer wall 138 of the evaporation chamber in extension of the rotation axis 116. Outside the evaporation chamber 102, the main shaft is connected to a toothed belt wheel 146 that is connected to a second toothed belt wheel 154 on the drive shaft of an electric motor 144 via a toothed belt 145. The electric motor 144 is mounted on the liquid evaporator 101 via a hinged joint 148 (Fig. 4). A spring 149 presses the hinged joint 148 outwards, so that the toothed belt 145 is held taut. The support shaft 142 is supported in a support bearing 147.

The liquid outlet 105 comprises a stationary collection arrangement 124 with an axial pipe 151 and two radial pipes 152. The axial pipe 151 is led out through the support shaft 142 and arranged so that the support shaft can rotate in relation to it. The two radial pipes are arranged in the upper disc-shaped chamber 137, and are mainly radially oriented in relation to the rotation axis 116. The radial inner end of each radial pipe 152 is fixed and liquidly connected to the axial pipe 151 and has at its radial outer end an open inlet 125 directed against the rotation direction of the rotation of the condensation chamber 104 in the evaporation chamber 102. The open inlet 125 is arranged at the extreme radial outer end of the upper disc-shaped chamber 137.

Via a second non-return valve (not shown), the liquid inlet 103 is connected to a liquid source (not shown). The second non-return valve permits fluid flow from the liquid source to the evaporation chamber 102, when the pressure in the liquid source is higher than the pressure in the evaporation chamber 102, and blocks fluid flow in the opposite direction. The liquid outlet 105 is connected to a tank (not shown), which will typically be open to atmospheric pressure. The connection to the tank may comprise a third non-return valve, which permits fluid flow from the liquid outlet 105 towards the tank, if the pressure in the axial pipe 151 exceeds the pressure in the tank, and blocks fluid flow in the opposite direction. Alternatively, the connection can be arranged so that only air - and not condensate 126 - can be sucked into the liquid outlet 105, when the pressure in the axial pipe 151 is lower than the pressure in the tank.

The liquid evaporator 101 is provided with a filling opening 155 near the centre of the upper part of the outer wall 138 of the evaporation chamber. The liquid evaporator 101 is further provided with an ultrasonic sensor (not shown), which is arranged in a sensor opening 156 in the outer wall 138 of the evaporation chamber. In relation to the centre of the evaporation chamber 102, the sensor opening 156 is placed opposite the rotation axis 116 and a little lower than then the mid of the evaporation chamber 102 height.

As shown in Fig. 3a, the main shaft 141 comprises a lower main shaft part 157 and an upper main shaft part 158. The lower end of the upper main shaft part 158 is shaped as a cone and in intermediate O-ring 164 is arranged in a corresponding recess in the upper end of the lower main shaft part 157. The main shaft parts 157, 158 are joined by means of a tightening bolt 160, whose thread engages a thread in a tightening block 159, which is fixed to a radially inner, pipe-shaped part of the heat conducting wall 106. The upper main shaft part 158 has a disc-shaped part, which is fixed via an intermediate O-ring 165 on the lower plate-shaped disc 136 by means of a number of bolts 161. A disc-shaped main cover plate 162 is fixed via an intermediate O-ring 166 to the bottom of the outer wall 138 of the evaporation chamber. The main cover plate 162 is provided with a central opening, through which the main shaft 141 is guided, and on whose radial inside a sealing 163 is arranged, which fits tightly against both the main cover plate 162 and the main shaft 141. The main bearing 143 comprises a double-row ball bearing, whose inner bearing bowl is fixed to the lower main shaft part 157, and whose outer bearing ball is fixed to a main bearing housing 167, which is fixed to the outer wall 138 of the evaporation chamber. The main bearing housing 167 has on its upper side a central opening, through which the main shaft 141 is guided, and whose radial inside is provided with a sealing that fits tightly against both the main bearing housing 167 and the main shaft 141. The liquid evaporator 101 is dimensioned so that the entry of the main shaft 141 through the main cover plate 162 is radially inside the surface 112 of the liquid ring. Thus, it is ensured that the sealings 163, 168 are kept dry during operation of the liquid evaporator 101, which considerably extends the lifetime of the sealings 163, 168 and the main bearing 143, as this are thus protected against grinding particles and corrosive or chemically aggressive substances in the liquid 118.

As shown in Fig. 3b, the support shaft 142 comprises a disc-shaped part, which is fixed by way of an intermediary O-ring 169 on the upper plate-shaped disc 136 by means of a number of bolts 170. A disc-shaped support cover plate 171 is fixed by way of an intermediary O-ring 172 on the top of the outer wall 138 of the evaporation chamber. The support cover plate 171 is supplied with a central opening, through which the support shaft 142 is guided, and on whose radial inside a sealing 173 is arranged, which closes tightly against both the support cover plate 171 and the support shaft 142. The support bearing 147 comprises a spherical roller bearing, whose inner bearing bowl is fixed to the support shaft 142, and whose outer bearing bowl is fixed to a support bearing housing 174, which is fixed to the outer wall 138 of the evaporation chamber. The roller bearing permits small variations of the direction of the support shaft 142 in relation to the evaporation chamber 102. The bottom of the support bearing housing 174 is provided with a central opening, through which the support shaft 142 is guided, and on whose radial inside a sealing 175 is arranged, which closes tightly against both the support bearing housing 174 and the support shaft 142. Analogously to the entry of the main shaft 141 through the main cover plate 162 - and for the same reason - the entry of the support shaft 142 through the support cover plate 171 is radially inside the surface 112 of the liquid ring.

Upwards, the support bearing housing 174 is connected to an end plate 176. The axial tube 151, which forms part of the collection arrangement 24, is fixed to the end plate 176, and is thus fixed in relation to the evaporation chamber 102. By way of an intermediary O-ring 177, the axial tube 151 is guided through a central opening in the end plate 176, axially through the support shaft 142 and on down into the disc-shaped chamber 137, where it is connected to the two radial tubes 152, which are thus also fixed in relation to the evaporation chamber 102. At the uppermost end of the support shaft 142 a sealing 179 is arranged, which closes tightly against both the support shaft 142 and the axial tube 151, but permits the support shaft 142 to rotate around the axial tube 151. At the lowermost end of the support shaft 142 a slide bearing 178 is arranged, which supports the axial tube 151. A cover 180 is fixed via an intermediary O-ring 181 by means of a thread to a pipe-shaped part 182 of the end plate 176, thus forming an outlet chamber 183 over the upper end of the axial tube 151. The cover 180 is provided with a connector 184 for the connection of a hose or the like to the liquid outlet. The valve arrangement 114 is connected to a radially internal, pipe-shaped part of the heat conducting wall 106.

Fig. 4 shows a lower part of the liquid evaporator 101 in a horizontal section. This clearly shows how the condensation chamber 104 with the blades 119 is arranged eccentrically in the evaporation chamber 102. The liquid ring 118 is distributed along the outer wall 138 of the evaporation chamber and forms a radially internal, approximated circular-cylindrical surface 112. The surface 112 of the liquid ring is intersected by the blades 119, so that each of the chambers 150 between the blades 119 in its radially external part comprises liquid 111 and in its radially internal part a gas pocket 113. The volume of the gas pockets 113 varies from chamber 150 to chamber, so that the largest volume exists in the chamber 150, which is arranged farthest away from the cylindrical part of the outer wall 138 of the evaporation chamber, while the smallest volume exists in the chamber 150, which is arranged closest to said part of the wall 138.

Fig. 5 shows one half of the liquid evaporator 101 in a vertical section. The Fig. shows the radial slots 185 in the disc-shaped plates 121, which connect the chambers 122 inside the blades 119 to the disc-shaped chambers 137. The upper and lower parts of the outer wall 138 of the evaporation chamber are provided with a number of ribs 186 as reinforcement, to avoid deformation of these during pressure differences between the evaporation chamber 102 and the surrounding atmosphere.

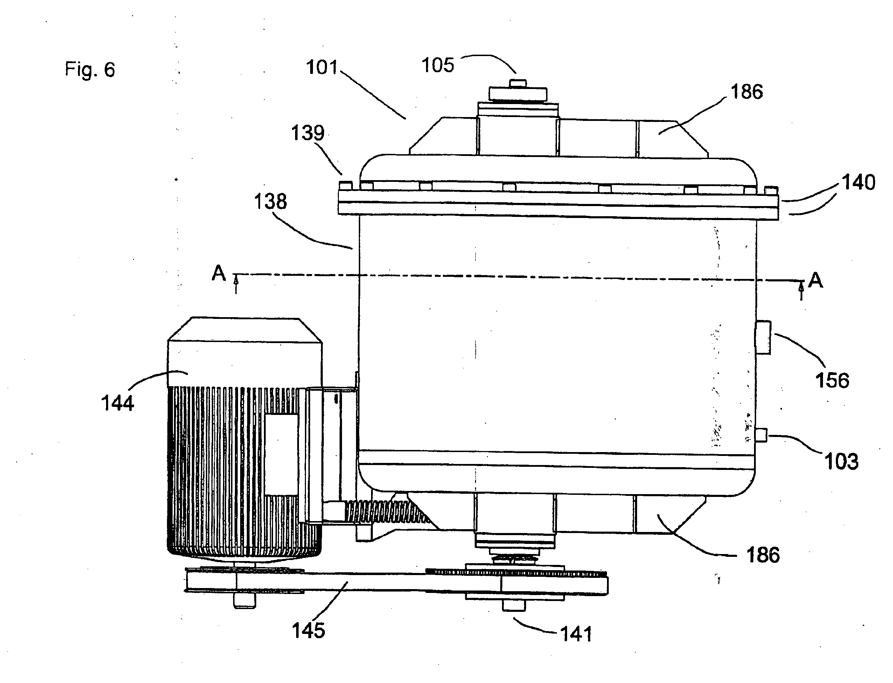

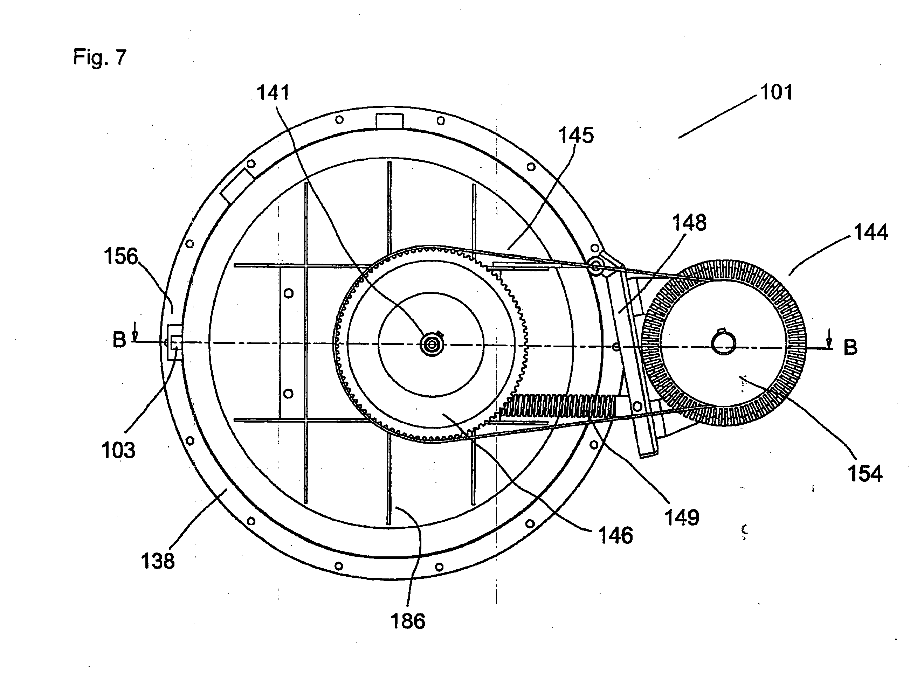

Figs. 6 and 7 show the liquid evaporator 101 from the outside, from the side and from the bottom. Further, they show the placing of the sections A-A and B-B, which are shown in Figs. 2 and 3. The reference numbers in these Figs. correspond to the reference numbers in the other Figs.

The valve arrangement 114, shown in the disassembled state in Fig. 8, has a valve seat 187, a star-shaped valve element 134 and a holding plate 192. The valve seat 187 has number of approximated triangular openings 188 distributed along its periphery. The valve arrangement 114 is fixed in the condensation chamber 104 by means of bolts, not shown, which are led through holes 194, 196, 197 in the holding plate 192, the valve element 134 and the valve seat 187, so that the valve seat 187 rests on the upper disc-shaped plate 121 (Fig. 3), which forms a part of the outer wall 115 of the condensation chamber. A vertical centring tube 193 is fixed to the holding plate 192, the tube 193 being led through corresponding, central holes in the valve element 134, the valve seat 187 and the upper disc-shaped plate 121. The centring tube 193 ensures that the parts 192, 134, 187 of the valve arrangement are arranged to be centred on the upper, disc-shaped plate 121. On the inside, the tube 193 is formed as a slide bearing to further support the axial tube 151 (Fig. 3b). The valve element 134 has a number of resilient tongues 135. When being in the resting position, that is, when they are not acted upon by a pressure, each tongue 135 covers an opening 188. The openings 188 correspond with the corresponding openings 123 in the plate 121, and together with these, they form fluid connections between the individual tongues 135 and the corresponding gas pockets 113 in the evaporation chamber 102. In each opening 188, the valve seat 187 has a number of walls 189, which are suited to support the corresponding tongue 135, when the pressure in the corresponding gas pocket 113 is lower than the pressure in the condensation chamber 104, and thus retain the tongue 135 in its resting position. In this situation, the tongue 135 closes for a fluid flow between the gas pocket 113 and the condensation chamber 104. The bottom side of the holding plate 192 is made so that it is higher in the vicinity of the outer edge of the holding plate 192 than at the radial centre of the holding plate. Thus, there is room for the tongues 135 to bend upwards, when the pressure in the corresponding gas pockets 113 is higher than the pressure in the condensation chamber 104. In this situation, the tongues 135 move away from their resting position, thus opening for a fluid flow from the gas pockets 113 concerned to the condensation chamber 104. Along its outer edge, the holding plate 192 comprises a number of downwardly directed pins 198, which are located radially outside of both the valve element 134 and the valve seat 187, when assembling the valve arrangement 114. The pins 198 are dimensioned so that after the assembly they rest on the upper disc-shaped plate 121, thus ensuring a predetermined axial distance between the holding plate 192 and the upper disc-shaped plate 121, which ensures an optimum axial assembly of the valve seat 187. The spaces 195 between the pins 198 are placed against the openings 188 in the valve seat 187, so that an optimum flow through the valve arrangement 114 is achieved.

After having reached a stable operation state, the liquid evaporator 101 in the Figs. 2-8 works as follows: The condensation chamber 104 rotates in the evaporation chamber 102 around the rotation axis 116 with a rotation speed, which is sufficiently high to put the liquid 111 to a so fast rotation that it forms a liquid ring 118 on the outer wall 138 of the evaporation chamber. This creates a number of gas pockets 113 between the inner cylindrical surface 112 of the liquid ring and the outer wall 115 of the condensation chamber, more specifically, in the radial inner pat of the chambers 150 between the blades 119. Due to the fact that the inertia of the liquid 111 is much larger than that of the gas pocket 113, and that the compressibility of the liquid 111 is much smaller than that of the gas pocket 113, and that the rotation axis 116 is placed eccentrically in relation to the circular evaporation chamber 102, and thus in relation to the liquid ring 118, the volume of each gas pocket 113 will decrease and increase in the course of one rotation of the condensation chamber 104. Thus, the pressure in the individual gas pockets 113 will increase and decrease cyclically during a period, which corresponds to the duration of one rotation of the condensation chamber 104. At the same time, mechanical energy is supplied to the liquid 111, so that it is heated. A part of the liquid 111 evaporates into the gas pockets 113.

In a part of the period, in which the pressure in a gas pocket 113 exceeds the pressure in the condensation chamber 104, the pressure difference causes that the corresponding tongue in the valve arrangement 114 is opened, and that gas containing vapour from the gas pocket 113 is led through the corresponding opening 123 in the upper disc-shaped plate 121 and through the valve arrangement 114 to the condensation chamber 104. In the remaining part of the period, the tongue 135 will cover the opening 188 in the valve seat 187 and thus close for a flow between the gas pocket 113 and the condensation chamber 104. As all gas pockets 113 pass this process cyclically, a pump effect occurs, which causes that the medium pressure in the condensation chamber 104 exceeds the medium pressure in the evaporation chamber 102. The pump structure is formed by the condensation chamber 104 and the liquid ring 118 in common. Due to the heat conducting wall 106, the temperature is almost the same in the two chambers 102, 104. As the boiling/condensation temperature of the vapour is higher at high pressures than at low pressures, the vapour in the condensation chamber 104 will tend to condense. During the formation of condensate 126, heat is emitted, which is led to the evaporation chamber 102 via the heat conducting wall 106, thus contributing to the heating of the liquid 111 and the gas pockets 113.

When the medium pressure in the evaporation chamber 102 gets lower than the pressure in the liquid source, liquid is sucked in through the liquid inlet 103 and the second non-return valve. This liquid replaces the amount of gas and vapour, which is currently pumped to the condensation chamber 104.

The condensation mainly takes place on the condensation surface 108. Due to the centrifugal force, which is caused by the rotation of the condensation chamber 104, the condensate 126 is flung off from the condensation surface 108. This increases the condensation speed, and the condensate gathers in the radially outer parts of the condensation chamber 104, that is, in the radially outer ends of the chambers 122 of the blades and in the radially outer parts of the disc-shaped chambers 137, where it will rotate together with the condensation chamber 104. A part of the condensate 126 will hit the open inlet 125 of the stationary collection arrangement 124, where it will get caught. Due to the inertia of the condensate 126, a liquid pressure will occur, which propagates through the radial tubes 152 and the axial tube 151. Thus, the condensate 126 will be pumped out of the condensation chamber 104 through the liquid outlet 105, even if the pressure in the condensation chamber 104 is lower than the pressure of the environment.

In the stable operation state, the temperatures and the medium pressures in the evaporation chamber 102 and the condensation chamber 104 are in a state of equilibrium, which depends on several factors, including the composition of the liquid, the temperature and the pressure in the liquid source, the amount of the flowing liquid, the pressure in the tank, the design of the collection arrangement 124, the amount of energy supplied to the liquid 111 by the rotation of the condensation chamber 104, the properties of the heat conducting wall, the ambient temperature and the heat loss of the evaporation chamber 102 to the environment. A suitable dimensioning of the liquid evaporator 101 and its components can thus permit an optimum regulation of temperatures and medium pressures in relation to the properties of the liquid to be evaporated, and to the desired flow of liquid. Such a regulation can also be adaptive during the operation of the liquid evaporator 101. The energy loss from exceeding heat energy in the part of the condensate 126, which is led to the tank, can be reduced by leading this part of the condensate 126 through the hot side of a heat exchanger and at the same time leading liquid from the liquid source through the cold side of the same heat exchanger, thus using a part of the otherwise lost heat energy to heat the liquid from the liquid source, before it reaches the evaporation chamber 102. The heat loss from the evaporation chamber 102 to the environment can be reduced by isolating the evaporation chamber 102 and/or by operating the liquid evaporator 101 at low medium pressures, causing a reduction of the boiling points and thus also of the operation temperatures in the chambers 102, 104. The medium pressures in the two chambers 102, 104 can easily be lower than the pressure in the surrounding atmosphere.

The liquid evaporator 101 is started by making the condensation chamber 104 rotate and then supplying a sufficient amount of liquid 111 from the liquid source through the liquid inlet 103 and the second non-return valve to the evaporation chamber 102 to enable the formation of a liquid ring 118. To ensure during the starting phase that a sufficient amount of liquid is supplied to the evaporation chamber 102, the pressure in the liquid source may be increased, or the second non-return valve can be forced open. Alternatively, liquid can be supplied through the filling opening 155. The supply of liquid is controlled automatically both during start and during operation of the liquid evaporator 101 by a control unit, not shown, which receives signals from an ultrasonic sensor that is arranged in the sensor opening 156 and is thus able to measure the position of the liquid surface 112.

The determination of the position of the liquid surface 112 is made as follows. The ultrasonic sensor sends sound waves into the liquid 111. The sound wave is reflected from the liquid surface 112 and then hits the ultrasonic sensor, which sends a corresponding signal to the control unit. The time delay in relation to the sent sound wave depends on the distance from the ultrasonic sensor to the liquid surface 12, and can thus be used as a direct measure of the radial thickness of the liquid ring 118 and thus of the amount of liquid in the evaporation chamber 102. As the sound velocity in a liquid depends on the properties of the liquid, for example, its composition, pressure and temperature, it may be necessary to compensate for variations in these properties, which could, for example, occur in that the content of concentrate in the liquid 111 is increased during operation of the liquid evaporator 101. The sent sound wave will, however, also be reflected by the radial outer edges of the blades 119, which will appear from the signal from the ultrasonic sensor. As the distance from the ultrasonic sensor to the closest position of the radial outer edges of the blades 119 is constant, the thickness of the liquid ring 118 can be exactly determined by comparing the time delays between the signal of the reflected wave coming from the liquid surface 112 and the signal from the first reflected wave that comes from the radial outer edge of a blade 119. Electronic filters can be used to amplify the signals or to stress the desired measuring signals. The signal from the ultrasonic sensor will change significantly, when, during standstill of the condensation chamber 104, the liquid surface 112 hits the ultrasonic sensor during filing of the evaporation chamber 102. The ultrasonic sensor is therefore arranged at a certain height over the bottom of the evaporation chamber 102, so that this change can be used to signal that the amount of liquid in the evaporation chamber 102 is sufficient to make the liquid evaporator 101 work.

The stable state of operation is achieved, when the amount of energy supplied to the liquid 111 by the rotation of the condensation chamber 104 corresponds to the net heat loss to the environment, for example from the liquid evaporator 101, or as surplus heat in the part of the condensate 126 that is led to the tank. In order to accelerate the obtaining of the stable operation state, the temperature of the liquid from the liquid source can be increased.

During operation, the liquid evaporator 101 separates liquid from the liquid source into condensate 126, which is led to the tank, an concentrate, which remains in the evaporation chamber 102, and whose share of the liquid 111 will increase. Depending on the composition of the liquid, the concentrate can be discharged automatically, for example through a suitable valve arrangement with a connection to the evaporation chamber 102. This is, for example, possible, if the concentrate is heavier than the liquid 111, and therefore gathers in the lower, radially outer part of the evaporation chamber 102. Alternatively, the evaporation chamber 102 can, at regular intervals, be flushed manually or automatically, to remove the concentrate. For manual cleaning of the evaporation chamber 102 and the outside of the condensation chamber 104, the bolts 139 holding together the flanges 140 are loosened, the upper part of the outer wall 138 of the evaporation chamber with supporting bearing 147 is removed, the bolt 160 is loosened and the condensation chamber 104 is removed from the evaporation chamber 102. Then, the components of the liquid evaporator 101, which get in touch with the liquid 111, can easily be rinsed or cleaned mechanically.

The liquid evaporator 101 is made of stainless steel (for example AISI 316) to obtain the largest possible resistance to aggressive components in the liquid 111. Due to the simple design, however, the liquid evaporator 101 can also be made of, for example, titanium, without becoming essentially more expensive. The valve seat 187 is made of a plastic material, for example PEEK, or another material, which is suited for sealing against steel and at the same time resistant to aggressive liquids and high temperatures. The valve seat 187 is glued to the upper disc-shaped plate 121 to prevent a leakage between these two parts.

The liquid evaporator 101 has a height of approximately 60 cm and a diameter of approximately 70 cm. The volume of the liquid ring is approximately 63 l. The liquid evaporator 101 works efficiently at a rotation speed of the condensation chamber 104 of 300 to 1000 RPM, and especially efficiently at approximately 500 RPM. This speed provides both a stable liquid ring 118, a sufficient supply of mechanical energy to the liquid 111, an efficient pumping of gas from the gas pockets 113 to the condensation chamber 104, and an efficient flinging of condensate 126 from the condensation surface 108.

When evaporating water, the liquid evaporator 101 works efficiently at temperatures between 30 and 130°C, a higher operation temperature causing a higher evaporation capacity. At an operation temperature of 30°C, the absolute operation pressure is approximately 0.045 bar, at 130°C approximately 2.7 bar.

The liquid evaporator 101, as shown in the Figs. 2 to 8, is meant to be driven as shown in the Figs., with vertical rotation axis 116 and upwardly facing support shaft 142. For example, both the main bearing 143 and the support bearing 147 are made for vertical operation. Further, the liquid 111 should be kept away from the valve arrangement 114 to prevent the liquid pressure from pressing liquid 111 through the valve arrangement 114 into the condensation chamber 104. This applies both when the condensation chamber 104 rotates and when it stands still. In the first case, the valve arrangement 114 in the liquid evaporator 101 shown will be radially inside the inner cylindrical surface 112 of the liquid, and thus out of touch with the liquid. In the latter case, the valve arrangement 114 will be above the horizontal surface 112 of the liquid, and thus also out of touch with the liquid. The liquid evaporator 101 can be supplied with a control unit that ensures, for example by means of signals from the ultrasonic sensor, that the amount of liquid 111 supplied to the evaporation chamber 102 will never exceed an amount ensuring that the valve arrangement 114 is always out of touch with the liquid 111. The liquid evaporator 101 can, however, with a suitable dimensioning of the bearings 143, 147 etc., with suitable placing of the valve arrangement 114 and with suitable use of control algorithms, be used in any random orientation, for example with horizontal or inclined rotation shaft, or "upside down". Thus, in principle, the liquid evaporator 101 will be suited for use in the weightless-state.

Both liquid evaporators 1, 101 - or systems - thus comprise an evaporation chamber 2, 102, with a liquid inlet 3, 103, a condensation chamber 4, 104, with a liquid outlet 5, 105, a heat conducting wall 6, 106, arranged with an evaporation surface 7, 107 in the evaporation chamber 2, 102, and a condensation surface 8, 108 in the condensation chamber 4, 104, a pump structure 9, 109, and a fluid connection passage 10, 110 with a valve arrangement 114 between the evaporation chamber 2, 102 and the condensation chamber 4, 104. The method used in these systems for evaporating a liquid 11, 111 comprises that a liquid 11, 111 is supplied through the liquid inlet 3, 103 to the evaporation chamber 2, 102, so that a gas pocket 113 is formed in the evaporation chamber 2, 102, to which gas pocket 113 a par of the liquid 11, 111 evaporates under adoption of heat energy. Using the pump arrangement 9, 109 will increase and decrease the pressure in the gas pocket 113 cyclically, so that it cyclically exceeds the pressure in the condensation chamber 4, 104. By means of the valve arrangement 114, gas from the gas pocket 113 is led through the connection passage 10, 110 to the condensation chamber 4, 104. The gas is condensed in the condensation chamber 4, 104 under the emission of heat energy, a part of the heat energy is transferred through the heat conducting wall 6, 106 from the condensation chamber 4, 104 to the evaporation chamber 2, 102, and the condensate 26 is led away from the condensation chamber 4, 104 through the liquid outlet 5, 105.

The method used in the liquid evaporator 101 (or the system) as shown in Figs. 2-8, also comprises the fact that the condensation chamber 104 rotates around a rotation axis 116 in the evaporation chamber 102 and makes the liquid 111 in the evaporation chamber 102 rotate in such a way that a liquid ring 118 is formed, and that the condensation chamber 104 cyclically compresses and expands the gas pocket 113 during its rotation.

## Claims

1. A liquid evaporator (1, 101) comprising an evaporation chamber (2, 102) with a liquid inlet (3, 103), a condensation chamber (4, 104) with a liquid outlet (5, 105), a heat conducting wall (6, 106) arranged with an evaporation surface (7, 107) in the evaporation chamber (2, 102) and a condensation surface (8, 108) in the condensation chamber (4, 104), a pump structure (9, 109) and a fluid connection passage (10, 110) between the evaporation chamber (2, 102) and the condensation chamber (4, 104), the evaporation chamber (2, 102) being adapted to contain a liquid (11, 111), whose surface (12, 112) delimits a gas pocket (13, 113), the connection passage (10, 110) ending in the gas pocket (13, 113), **characterised in that** the connection passage (10, 110) is provided with a valve arrangement (14, 114) comprising a non-return valve, which permits a fluid flow from the gas pocket (13, 113) towards the condensation chamber (4, 104), when the pressure in the gas pocket (13, 113) exceeds the pressure in the condensation chamber (4, 104), and blocks a fluid flow in the opposite direction, and that the pump structure (9, 109) is adapted to cyclically increase or decrease the pressure in the gas pocket (13, 113) by moving the heat conductive wall (6, 106), so that cyclically it exceeds the pressure in the condensation chamber (4, 104).

2. A liquid evaporator according to claim 1, **characterised in that** the pump structure (9, 109) is adapted to supply mechanical energy to the liquid (11, 111) in the evaporation chamber (2, 102) in such a way that the liquid (11, 111) is heated.

3. A liquid evaporator according to claim 1 or 2, **characterised in that** the condensation chamber (4, 104) is adapted to permit condensation of gas on the condensation surface (8, 108) of the heat conducting wall.

4. A liquid evaporator according to any of the preceding claims, **characterised in that** the pump structure (9, 109) is adapted to increase and decrease the pressure in the gas pocket (13, 113) by compressing and expanding the gas pocket (13, 113).

5. A liquid evaporator according to any of the preceding claims, **characterised in that** the pump structure (9, 109) is adapted to compress and expand the gas pocket (13, 113) by moving the liquid (11, 111) in the evaporation chamber (2, 102).

6. A liquid evaporator according to any of the preceding claims, **characterised in that** the condensation chamber (4, 104) is arranged in the evaporation chamber (2, 102) and surrounded by an outer wall (115), which is completely or partly formed by the heat conducting wall (6, 106).

7. A liquid evaporator according to claim 6, **characterised in that** the condensation chamber (4, 104) is arranged to rotate around a rotation axis (116) in the evaporation chamber (2, 102).

8. A liquid evaporator according to claim 7, **characterised in that** the outer wall (115) of the condensation chamber is adapted to cyclically compress and expand the gas pocket (13, 113) during its rotation.

9. A liquid evaporator according to claim 8, **characterised in that** the evaporation chamber (2, 102) has a circular cross-section (117) across the rotation axis (116) and that the rotation axis (116) is arranged eccentrically in relation to the circular evaporation chamber (2, 102).

10. A liquid evaporator according to claim 8 or 9, **characterised in that** the outer wall (115) of the condensation chamber is adapted to make the liquid (11, 111) in the evaporation chamber (2, 102) rotate in such a way that a liquid ring (118) is formed.

11. A liquid evaporator according to any of the claims 8 to 10, **characterised in that** the heat conducting wall (6, 106) forms a number of blades (119).

12. A liquid evaporator according to claim 11, **characterised in that** each axial end (120) of the outer wall (115) of the condensation chamber forms a disc-shaped plate (121) against which the blades (119) close tightly.

13. A liquid evaporator according to claim 11 or 12, **characterised in that** the blades (119) form inner chambers (122), each forming a part of the condensation chamber (4, 104).

14. A liquid evaporator according to any of the claims 11 to 13, **characterised in that** the blades (119) are plane and extend radially from the rotation axis (116).

15. A liquid evaporator according to any of the claims 7 to 14, **characterised in that** the valve arrangement (14, 114) comprises a number of openings (123) arranged around the rotation axis (116) in the outer wall (115) of the condensation chamber.

16. A liquid evaporator according to any of the claims 7 to 15, **characterised in that** the liquid outlet (5, 105) comprises a stationary collection arrangement (124) with an open inlet (125) pointing against the rotation direction of the rotation of the condensation chamber (4, 104) in the evaporation chamber (2, 102).

17. A method of evaporating liquid (11, 111) in a system (1, 101) comprising an evaporation chamber (2, 102) with a liquid inlet (3, 103), a condensation chamber (4, 104) with a liquid outlet (5, 105), a heat conducting wall (6, 106) arranged with an evaporation surface (7, 107) in the evaporation chamber (2, 102) and a condensation surface (8, 108) in the condensation chamber (4, 104), a pump structure (9, 109) and a fluid connection passage (10, 110) with a valve arrangement (14, 114) between the evaporation chamber (2, 102) and the condensation chamber (4, 104), said method comprising the supply of a liquid (11, 111) through the liquid inlet (3, 103) to the evaporation chamber (2, 102), so that a gas pocket (13, 113) is formed in the evaporation chamber (2, 102), a part of the liquid (11, 111) evaporating to said gas pocket (13, 113) under adoption of heat energy, the use of the pump arrangement (9, 109) increasing and decreasing the pressure in the gas pocket (13, 113) cyclically by moving the heat conducting wall (6,106), so that it cyclically exceeds the pressure in the condensation chamber (4, 104), the valve arrangement (14, 114) comprising a non-return valve leading gas from the gas pocket (13, 113) through the connection passage (10, 110) to the condensation chamber (4, 104), the gas being condensed in the condensation chamber (4, 104) under emission of heat energy, a part of which being transferred through the heat conducting wall (6, 106) from the condensation chamber (4, 104) to the evaporation chamber (2, 102), the condensate (26) being led away from the condensation chamber (4, 104) through the liquid outlet (5, 105).

18. A method according to claim 17, **characterised in that** the condensation chamber (104) rotates around a rotation axis (116) in the evaporation chamber (102) and makes the liquid (111) in the evaporation chamber (102) rotate in such a way that a liquid ring (118) is formed, the condensation chamber (104) cyclically compressing and expanding the gas pocket (113) during its rotation.

## Patentansprüche

1. Flüssigkeitsverdampfer (1, 101), der eine Verdampfungskammer (2, 102) mit einem Flüssigkeitseinlass (3, 103), eine Kondensationskammer (4, 104) mit einem Flüssigkeitsauslass (5, 105), eine wärmeleitende Wand (6, 106), die in der Verdampfungskammer (2, 102) mit einer Verdampfungsoberfläche (7, 107) und in der Kondensationskammer (4, 104) mit einer Kondensationsoberfläche (8, 108) angeordnet ist, eine Pumpstruktur (9, 109) und einen Fluidverbindungsdurchlass (10, 110) zwischen der Verdampfungskammer (2, 102) und der Kondensationskammer (4, 104) umfasst, wobei die Verdampfungskammer (2, 102) dafür ausgelegt ist, eine Flüssigkeit (11, 111), deren Oberfläche (12, 112) eine Gastasche (13, 113) abgrenzt, zu enthalten, und wobei der Verbindungsdurchlass (10, 110) in der Gastasche (13, 113) endet, **dadurch gekennzeichnet, dass** der Verbindungsdurchlass (10, 110) mit einer Ventilanordnung (14, 114), die ein Absperrventil umfasst, versehen ist, die einen Fluidstrom aus der Gastasche (13, 113) zur Kondensationskammer (4, 104) ermöglicht, wenn der Druck in der Gastasche (13, 113) den Druck in der Kondensationskammer (4, 104) übersteigt, und einen Fluidstrom in die Gegenrichtung blockiert, und dass die Pumpstruktur (9, 109) dafür ausgelegt ist, den Druck in der Gastasche (13, 113) zyklisch zu erhöhen oder zu erniedrigen, indem die wärmeleitende Wand (6, 106) derart bewegt wird, dass die Gastasche den Druck in der Kondensationskammer (4, 104) zyklisch überschreitet.

2. Flüssigkeitsverdampfer nach Anspruch 1, **dadurch gekennzeichnet, dass** die Pumpstruktur (9, 109) dafür ausgelegt ist, zu der Flüssigkeit (11, 111) in der Verdampfungskammer (2, 102) mechanische Energie derart zuzuführen, dass die Flüssigkeit (11, 111) erwärmt wird.

3. Flüssigkeitsverdampfer nach Anspruch 1 oder 2, **dadurch gekennzeichnet, dass** die Kondensationskammer (4, 104) dafür ausgelegt ist, eine Kondensation von Gas auf der Kondensationsoberfläche (8, 108) der wärmeleitenden Wand zu ermöglichen.

4. Flüssigkeitsverdampfer nach einem der vorhergehenden Ansprüche, **dadurch gekennzeichnet, dass** die Pumpstruktur (9, 109) dafür ausgelegt ist, den Druck in der Gastasche (13, 113) zu erhöhen und zu erniedrigen, indem die Gastasche (13, 113) zusammengedrückt und ausgedehnt wird.

5. Flüssigkeitsverdampfer nach einem der vorhergehenden Ansprüche, **dadurch gekennzeichnet, dass** die Pumpstruktur (9, 109) dafür ausgelegt ist, die Gastasche (13, 113) zusammenzudrücken und auszudehnen, indem die Flüssigkeit (11, 111) in der Verdampfungskammer (2, 102) bewegt wird.

6. Flüssigkeitsverdampfer nach einem der vorhergehenden Ansprüche, **dadurch gekennzeichnet, dass** die Kondensationskammer (4, 104) in der Verdampfungskammer (2, 102) angeordnet ist und von einer äußeren Wand (115), die vollständig oder teilweise von der wärmeleitenden Wand (6, 106) gebildet wird, umgeben ist.

7. Flüssigkeitsverdampfer nach Anspruch 6, **dadurch gekennzeichnet, dass** die Kondensationskammer (4, 104) angeordnet ist, um sich in der Verdampfungskammer (2, 102) um eine Drehachse zu drehen.

8. Flüssigkeitsverdampfer nach Anspruch 7, **dadurch gekennzeichnet, dass** die äußere Wand (115) der Kondensationskammer dafür ausgelegt ist, die Gastasche (13, 113) während ihrer Umdrehung zyklisch zusammenzudrücken und auszudehnen

9. Flüssigkeitsverdampfer nach Anspruch 8, **dadurch gekennzeichnet, dass** die Verdampfungskammer (2, 102) einen kreisförmigen Querschnitt (117) über die Drehachse (116) hinweg aufweist und dass die Drehachse (116) in Bezug auf die kreisförmige Verdampfungskammer (2, 102) exzentrisch angeordnet ist.

10. Flüssigkeitsverdampfer nach Anspruch 8 oder 9, **dadurch gekennzeichnet, dass** die äußere Wand (115) der Kondensationskammer dafür ausgelegt ist, dass sie die Flüssigkeit (11, 111) dazu veranlasst, sich in der Verdampfungskammer (2, 102) in der Weise zu drehen, dass ein Flüssigkeitsring (118) gebildet wird.

11. Flüssigkeitsverdampfer nach einem der Ansprüche 8 bis 10, **dadurch gekennzeichnet, dass** die wärmeleitende Wand (6, 106) eine Anzahl Flügel (119) bildet.

12. Flüssigkeitsverdampfer nach Anspruch 11, **dadurch gekennzeichnet, dass** jedes axiale Ende (120) der äußeren Wand (115) der Kondensationskammer eine scheibenförmige Platte (121) bildet, gegen die die Flügel (119) dicht schließen.

13. Flüssigkeitsverdampfer nach Anspruch 11 oder 12, **dadurch gekennzeichnet, dass** die Flügel (119) innere Kammern (122) bilden, wobei jede einen Teil der Kondensationskammer (4, 104) bildet.

14. Flüssigkeitsverdampfer nach einem der Ansprüche 11 bis 13, **dadurch gekennzeichnet, dass** die Flügel (119) eben sind und sich radial von der Drehachse (116) erstrecken.

15. Flüssigkeitsverdampfer nach einem der Ansprüche 7 bis 14, **dadurch gekennzeichnet, dass** die Ventilanordnung (14, 114) eine Anzahl von Öffnungen (123) umfasst, die um die Drehachse (116) der äußeren Wand (115) der Kondensationskammer angeordnet sind.

16. Flüssigkeitsverdampfer nach einem der Ansprüche 7 bis 15, **dadurch gekennzeichnet, dass** der Flüssigkeitsauslass (5, 105) eine stationäre Zusammenstellung (124) mit einem offenen Einlass (125) umfasst, der gegen die Drehrichtung der Drehung der Kondensationskammer (4, 104) in der Verdampfungskammer (2, 102) zeigt.

17. Verfahren zum Verdampfen einer Flüssigkeit (11, 111) in einem System (1, 101), das eine Verdampfungskammer (2, 102) mit einem Flüssigkeitseinlass (3, 103), eine Kondensationskammer (4, 104) mit einem Flüssigkeitsauslass (5, 105), eine wärmeleitende Wand (6, 106), die in der Verdampfungskammer (2, 102) mit einer Verdampfungsoberfläche (7, 107) und in der Kondensationskammer (4, 104) mit einer Kondensationsoberfläche (8, 108) angeordnet ist, eine Pumpstruktur (9, 109) und einen Fluidverbindungsdurchlass (10, 110) mit einer Ventilanordnung (14, 114) zwischen der Verdampfungskammer (2, 102) und der Kondensationskammer (4, 104), umfasst, wobei das Verfahren die Zufuhr einer Flüssigkeit (11, 111) durch den Flüssigkeitseinlass (3, 103) zu der Verdampfungskammer (2, 102) umfasst, so dass eine Gastasche (13, 113) in der Verdampfungskammer (2, 102) gebildet wird, wobei ein Teil der Flüssigkeit (11, 111) unter Aufnahme von Wärmeenergie zu der Gastasche (13, 113) verdampft, wobei die Verwendung der Pumpanordnung (9, 109) den Druck in der Gastasche (13, 113) zyklisch erhöht und erniedrigt, indem die wärmeleitende Wand (6, 106) derart bewegt wird, dass die Gastasche den Druck in der Kondensationskammer (4, 104) zyklisch überschreitet, wobei die Ventilanordnung (14, 114), die ein Absperrventil umfasst, Gas von der Gastasche (13, 113) durch den Verbindungsdurchlass (10, 110) zu der Kondensationskammer (4, 104) führt, wobei das Gas in der Kondensationskammer (4, 104) unter Emission von Wärmeenergie kondensiert wird, wobei ein Teil davon durch die wärmeleitende Wand (6, 106) von der Kondensationskammer (4, 104) an die Verdampfungskammer (2, 102) übertragen wird, wobei das Kondensat (26) von der Kondensationskammer (4, 104) durch den Flüssigkeitsauslass (5, 105) weggeführt wird.

18. Verfahren nach Anspruch 17, **dadurch gekennzeichnet, dass** die Kondensationskammer (104) in der Verdampfungskammer (102) um eine Drehachse (116) dreht und die Flüssigkeit (111) dazu veranlasst, sich in der Verdampfungskammer (102) in der Weise zu drehen, dass ein Flüssigkeitsring (118) gebildet wird, wobei die Kondensationskammer (104) während ihrer Drehung die Gastasche (13, 113) zyklisch zusammendrückt und ausdehnt.

## Revendications

1. Evaporateur de liquide (1, 101) comprenant une chambre d'évaporation (2, 102) avec une entrée de liquide (3, 103), une chambre de condensation (4, 104) avec une sortie de liquide (5, 105), une paroi conductrice de chaleur (6, 106) agencée avec une surface d'évaporation (7, 107) dans la chambre d'évaporation (2, 102) et une surface de condensation (8, 108) dans la chambre de condensation (4, 104), une structure de pompe (9, 109) et un passage de connexion fluidique (10, 110) entre la chambre d'évaporation (2, 102) et la chambre de condensation (4, 104), la chambre d'évaporation (2, 102) étant adaptée pour contenir un liquide (11, 111), dont la surface (12, 112) délimite une poche de gaz (13, 113), le passage de connexion (10, 110) se terminant dans la poche de gaz (13, 113), **caractérisé en ce que** le passage de connexion (10, 110) est pourvu d'un agencement de soupape (14, 114) comprenant une soupape anti-retour qui permet un écoulement de fluide de la poche de gaz (13, 113) vers la chambre de condensation (4, 104), quand la pression dans la poche de gaz (13, 113) dépasse la pression dans la chambre de condensation (4, 104), et bloque un écoulement de fluide dans le sens opposé, et **en ce que** la structure de pompe (9, 109) est adaptée pour augmenter ou diminuer de façon cyclique la pression dans la poche de gaz (13, 113) en déplaçant la paroi conductrice de chaleur (6, 106), de sorte qu'elle dépasse de façon cyclique la pression dans la chambre de condensation (4, 104).

2. Evaporateur de liquide selon la revendication 1, **caractérisé en ce que** la structure de pompe (9, 109) est adaptée pour fournir de l'énergie mécanique au liquide (11, 111) dans la chambre d'évaporation (2, 102) de manière telle que le liquide (11, 111) est chauffé.

3. Evaporateur de liquide selon la revendication 1 ou la revendication 2, **caractérisé en ce que** la chambre de condensation (4, 104) est adaptée pour permettre une condensation de gaz sur la surface de condensation (8, 108) de la paroi conductrice de chaleur.

4. Evaporateur de liquide selon l'une quelconque des revendications précédentes, **caractérisé en ce que** la structure de pompe (9, 109) est adaptée pour augmenter et diminuer la pression dans la poche de gaz (13, 113) en comprimant et en dilatant la poche de gaz (13, 113).

5. Evaporateur de liquide selon l'une quelconque des revendications précédentes, **caractérisé en ce que** la structure de pompe (9, 109) est adaptée pour comprimer et dilater la poche de gaz (13, 113) en déplaçant le liquide (11, 111) dans la chambre d'évaporation (2, 102).

6. Evaporateur de liquide selon l'une quelconque des revendications précédentes, **caractérisé en ce que** la chambre de condensation (4, 104) est agencée dans la chambre d'évaporation (2, 102) et entourée par une paroi externe (115), qui est complètement ou partiellement formée par la paroi conductrice de chaleur (6, 106).

7. Evaporateur de liquide selon la revendication 6, **caractérisé en ce que** la chambre de condensation (4, 104) est agencée pour entrer en rotation autour d'un axe de rotation (116) dans la chambre d'évaporation (2, 102).

8. Evaporateur de liquide selon la revendication 7, **caractérisé en ce que** la paroi externe (115) de la chambre de condensation est adaptée pour comprimer et dilater de façon cyclique la poche de gaz (13, 113) pendant sa rotation.

9. Evaporateur de liquide selon la revendication 8, **caractérisé en ce que** la chambre d'évaporation (2, 102) a une section transversale circulaire (117) sur l'axe de rotation (116) et que l'axe de rotation (116) est agencé de façon excentrique par rapport à la chambre d'évaporation circulaire (2, 102).

10. Evaporateur de liquide selon la revendication 8 ou la revendication 9, **caractérisé en ce que** la paroi externe (115) de la chambre de condensation est adaptée pour faire entrer le liquide (11, 111) en rotation dans la chambre d'évaporation (2, 102) d'une façon telle qu'un anneau de liquide (118) se forme.

11. Evaporateur de liquide selon l'une quelconque des revendications 8 à 10, **caractérisé en ce que** la paroi conductrice de chaleur (6, 106) forme un nombre de pales (119).

12. Evaporateur de liquide selon la revendication 11, **caractérisé en ce que** chaque extrémité axiale (120) de la paroi externe (115) de la chambre de condensation forme une plaque en forme de disque (121) contre laquelle les pales (119) se ferment étroitement.

13. Evaporateur de liquide selon la revendication 11 ou la revendication 12, **caractérisé en ce que** les pales (119) forment des chambres internes (122), chacune formant une partie de la chambre de condensation (4, 104).

14. Evaporateur de liquide selon l'une quelconque des revendications 11 à 13, **caractérisé en ce que** les pales (119) sont planes et s'étendent de façon radiale depuis l'axe de rotation (116).

15. Evaporateur de liquide selon l'une quelconque des revendications 7 à 14, **caractérisé en ce que** l'agencement de soupape (14, 114) comprend un nombre d'ouvertures (123) agencées autour de l'axe de rotation (116) dans la paroi externe (115) de la chambre de condensation.

16. Evaporateur de liquide selon l'une quelconque des revendications 7 à 15, **caractérisé en ce que** la sortie de liquide (5, 105) comprend un agencement de collecte stationnaire (124) avec une entrée ouverte (125) pointant à l'opposé du sens de rotation de la rotation de la chambre de condensation (4, 104) dans la chambre d'évaporation (2, 102).

17. Procédé d'évaporation d'un liquide (11, 111) dans un système (1, 101) comprenant une chambre d'évaporation (2, 102) avec une entrée de liquide (3, 103), une chambre de condensation (4, 104) avec une sortie de liquide (5, 105), une paroi conductrice de chaleur (6, 106) agencée avec une surface d'évaporation (7, 107) dans la chambre d'évaporation (2, 102) et une surface de condensation (8, 108) dans la chambre de condensation (4, 104), une structure de pompe (9, 109) et un passage de connexion fluidique (10, 110) avec un agencement de soupape (14, 114) entre la chambre d'évaporation (2, 102) et la chambre de condensation (4, 104), ledit procédé comprenant la fourniture d'un liquide (11, 111) via l'entrée de liquide (3, 103) à la chambre d'évaporation (2, 102), de sorte qu'une poche de gaz (13, 113) se forme dans la chambre d'évaporation (2, 102), une partie du liquide (11, 111) s'évaporant dans ladite poche de gaz (13, 113) sous l'adoption d'énergie thermique, l'utilisation de l'agencement de pompe (9, 109) augmentant et diminuant la pression dans la poche de gaz (13, 113) de façon cyclique en déplaçant la paroi conductrice de chaleur (6, 106), de sorte qu'elle dépasse de façon cyclique la pression dans la chambre de condensation (4, 104), l'agencement de soupape (14, 114) comprenant une soupape anti-retour conduisant le gaz de la poche de gaz (13, 113) via le passage de connexion (10, 110) à la chambre de condensation (4, 104), le gaz étant condensé dans la chambre de condensation (4, 104) sous l'émission d'énergie thermique, une partie de laquelle étant transférée via la paroi conductrice de chaleur (6, 106) de la chambre de condensation (4, 104) vers la chambre d'évaporation (2, 102), le condensat (26) étant emmené loin de la chambre de condensation (4, 104) via la sortie de liquide (5, 105).

18. Procédé selon la revendication 17, **caractérisé en ce que** la chambre de condensation (104) entre en rotation autour de l'axe de rotation (116) dans la chambre d'évaporation (102) et fait entrer le liquide (111) en rotation dans la chambre d'évaporation (102) d'une façon telle qu'un anneau de liquide (118) se forme, la chambre de condensation (104) comprimant et dilatant de façon cyclique la poche de gaz (113) pendant sa rotation.
